# EUROPEAN PATENT APPLICATION

(11) **EP 4 187 658 A1**
(43) Date of publication of application: **31.05.2023**
(21) Application number: 21869747.2
(22) Date of filing: 16.09.2021
(51) Int. Cl.: H01M 10/04, H01M 50/54, H01M 50/528, H01M 50/166, H01M 50/545, H01M 50/183, H01M 50/449, H01M 50/109, H01M 50/153

(54) **BUTTON-TYPE SECONDARY BATTERY**

(30) Priority: 17.09.2020 KR 20200119622; 18.08.2021 KR 20210109101
(71) Applicant: LG Energy Solution, Ltd., Seoul 07335 (KR)
(72) Inventor: KIM, Min Gyu, Daejeon 34122 (KR); LEE, Yong Gon, Daejeon 34122 (KR); LEE, Je Jun, Daejeon 34122 (KR); LIM, Jae Won, Daejeon 34122 (KR); MIN, Geon Woo, Daejeon 34122 (KR); CHO, Min Su, Daejeon 34122 (KR); SUNG, Joo Hwan, Daejeon 34122 (KR); CHAE, Sang Hak, Daejeon 34122 (KR)
(74) Representative: Hoffmann Eitle
(86) International application number: PCT/KR2021/012699
(87) International publication number: WO 2022/060125

(57) **Abstract**

The present invention relates to a button-type secondary battery, and more particularly, to a button-type secondary battery, which has strong coupling so that a gas that is harmful to the human body does not leak to the outside of the battery even though an excessive internal pressure is generated by the gas generated inside the battery, and an electrolyte does not leak to the outside of the battery, is improved in a vacuum ratio occupied by an electrode assembly within the battery to maximize battery capacity and energy density, and is simplified and convenient in manufacturing process to improve production efficiency.

The button-type secondary battery according to the present invention relates to a button-type secondary battery, of which a diameter is greater than a height, comprises: an electrode assembly; a lower can in which the electrode assembly is inserted and on which a first screw thread is formed on an outer circumferential surface thereof; an upper can which is configured to cover an opening of an upper end of the lower can and on which a second screw thread corresponding to the first screw thread is formed on an inner circumferential surface thereof; and an insulator interposed between the upper can and the lower can to prevent the upper can and the lower can from being short-circuited, wherein the electrode assembly is formed by stacking a plurality of first electrodes, a separator, and a second electrode in a horizontal direction, and a first electrode tab extending from the first electrodes of the electrode assembly is in contact with the upper can.

## Description

### CROSS-REFERENCE TO RELATED APPLICATION

The present application claims the benefit of the priority of Korean Patent Application Nos. 10-2020-0119622, filed on September 17, 2020, and 10-2021-0109101, filed on August 18, 2021, which are hereby incorporated by reference in their entirety.

### TECHNICAL FIELD

The present invention relates to a button-type secondary battery, and more particularly, to a button-type secondary battery, which has strong coupling so that a gas that is harmful to the human body does not leak to the outside of the battery even though an excessive internal pressure is generated by the gas generated inside the battery, and an electrolyte does not leak to the outside of the battery, is improved in a vacuum ratio occupied by an electrode assembly within the battery to maximize battery capacity and energy density, and is simplified and convenient in manufacturing process to improve production efficiency.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases. Also, recently, due to the trend of smaller wearable devices, the importance of developing small batteries such as button-type secondary batteries has been highlighted.

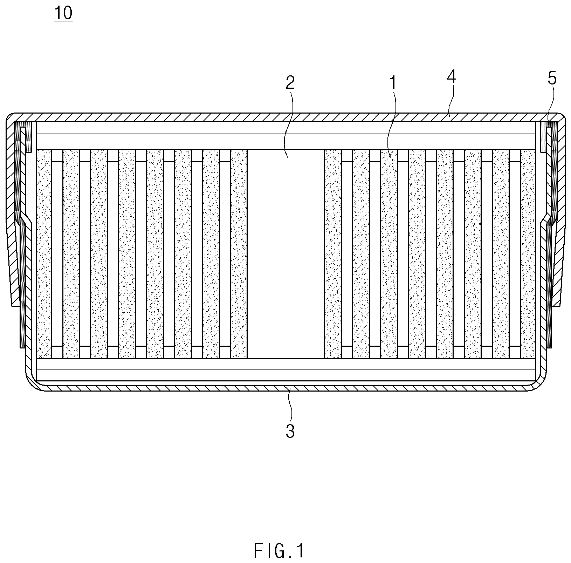

FIG. 1 is a cross-sectional view of a button-type secondary battery according to the related art.

Referring to FIG. 1, a button-shaped secondary battery 10 according to the related art has a shape that is divided into upper and lower housings and has a structure in which an upper cylindrical can 4 and a lower cylindrical can 3 are press-fitted. That is, an outer diameter of the lower cylindrical can 3 is slightly larger than that of an upper portion thereof to realize the press-fitting. In the case of the press-fitting, it is the principle that a shape of the button-type secondary battery is maintained due to friction force due to the press-fitting. Also, in the button-shaped secondary battery according to the related art, the upper can 4 and the lower can 3 are manufactured to match a size of an internal electrode assembly 1 so as to be press-fitted with each other, and thus, there is no available space therein.

However, in this configuration, when the internal pressure increases due to generation of an internal gas, etc., there is no fixing force other than frictional force, and thus, there is a high possibility that the upper can 4 and the lower can 3 are separated from each other. If the internal pressure rises, the internal pressure may rise due to side reactions and also rise during a normal cycle, but if the internal pressure excessively rises, the upper can and the lower can are separated from each other and thus may not function as a battery. Therefore, it is necessary to research a product in which upper and lower cans are not separated from each other because the upper and lower cans are strongly coupled to each other.

In addition, referring to FIG. 1, in the related art, an electrode assembly 1 inside a battery is provided as a jelly roll-type electrode assembly manufactured by winding an electrode and a separator. The electrode assembly 1 is disposed in a form in which a winding axis is perpendicular to the ground. However, when the battery is formed as described above, a center hole is formed in a center of the electrode assembly due to a core which serves as a tool for performing the winding. That is, a space that does not produce electricity is formed in the center of the electrode assembly. This may be an inefficient factor for the button-type battery that is small in size, limited, and widely used in the wearable device markets. Thus, there is a need to carry out research for secure an improved capacity.

### DISCLOSURE OF THE INVENTION

### TECHNICAL PROBLEM

The present invention has been devised to solve the above problems, and an object of the present invention is to provide a button-type secondary battery, which has strong coupling so that a gas that is harmful to the human body does not leak to the outside of the battery even though an excessive internal pressure is generated by the gas generated inside the battery, and an electrolyte does not leak to the outside of the battery, is improved in a vacuum ratio occupied by an electrode assembly within the battery to maximize battery capacity and energy density, and is simplified and convenient in manufacturing process to improve production efficiency.

### TECHNICAL SOLUTION

The button-type secondary battery according to the present invention relates to a button-type secondary battery, of which a diameter is greater than a height, comprises: an electrode assembly; a lower can in which the electrode assembly is inserted and on which a first screw thread is formed on an outer circumferential surface thereof; an upper can which is configured to cover an opening of an upper end of the lower can and on which a second screw thread corresponding to the first screw thread is formed on an inner circumferential surface thereof; and an insulator interposed between the upper can and the lower can to prevent the upper can and the lower can from being short-circuited, wherein the electrode assembly is formed by stacking a plurality of first electrodes, a separator, and a second electrode in a horizontal direction, and a first electrode tab extending from the first electrodes of the electrode assembly is in contact with the upper can.

The upper can may comprise an upper can electrode terminal part connected to the first electrode of the electrode assembly through the first electrode tab to form a terminal connected to an external device and configured to cover the opening of the upper end of the lower can, and the first electrode tab may comprise: a support part connected to the plurality of first electrodes of the electrode assembly; and a contact part extending from the support part so as to be in contact with the upper can electrode terminal part.

The first electrode may comprise: a first electrode coating portion which is coated with an electrode active material on an electrode collector; and a first electrode non-coating portion which extends laterally from the first electrode coating portion and is not coated with the electrode active material, but is configured as only the electrode collector, wherein the support part may be connected to the plurality of first electrode non-coating portions.

The plurality of first electrode non-coating portions may be bonded to each other to form a first electrode non-coating portion bundle, and the support part may be connected to the first electrode non-coating portion bundle.

The support part may be formed in a bar shape, and the contact part may be formed in a circular ring shape.

The contact part having the circular ring shape may have a thickness greater than that of the support part.

The support part may be formed in a bar shape, and the contact part may be formed in a circular plate shape.

An outer circumferential diameter of the contact part formed in the circular ring shape and an outer circumferential diameter of the electrode assembly may have sizes corresponding to each other.

The insulator may be made of a polybutylene terephthalate (PBT) material.

The insulator may comprise: an inner insulator disposed inside the lower can; an outer insulator disposed outside the lower can; and a connection insulator configured to connect the inner insulator to the outer insulator.

The upper can and the lower can may be screw-coupled to each other by the first screw thread and the second screw thread, the outer insulator may be interposed between the first screw thread and the second screw thread, and the outer insulator may be pressed by a protruding shape of each of the first screw thread and the second screw thread to form an uneven shape and be fitted between the first screw thread and the second screw thread.

The inner insulator may be disposed between the first electrode tab and the lower can to prevent the first electrode tab and the lower can from being in contact with each other.

The separator may comprise a safety reinforced separator (SRS) single-sided coating separator.

The plurality of first electrodes, the separator, and the second electrode may have a circular shape and are stacked horizontally, wherein the entire stack may be vertically bonded by heat and a pressure.

The outermost first electrode disposed at the outermost side of the electrode assembly may be in contact with a bottom surface of the first electrode tab.

The outermost first electrode disposed at the outermost side of the electrode assembly may be in contact with a bottom surface of the contact part.

The outermost first electrode may comprise a single-sided electrode in which an outer surface facing the upper can is not coated with an electrode active material, but only an inner surface is coated with the electrode active material.

An end of the upper can may be bent in a direction of a central axis of the lower can.

The outer insulator may extend downward along an outer wall of the lower can, wherein an end of the outer insulator may further extend downward than an end of the upper can.

### ADVANTAGEOUS EFFECTS

The button-type secondary battery according to the present invention relates to a button-type secondary battery, of which a diameter is greater than a height, comprises: an electrode assembly; a lower can in which the electrode assembly is inserted and on which a first screw thread is formed on an outer circumferential surface thereof; an upper can which is configured to cover an opening of an upper end of the lower can and on which a second screw thread corresponding to the first screw thread is formed on an outer circumferential surface thereof; and an insulator interposed between the upper can and the lower can to prevent the upper can and the lower can from being short-circuited, wherein the electrode assembly is formed by stacking a plurality of first electrodes, a separator, and a second electrode in a horizontal direction, and a first electrode tab extending from the first electrodes of the electrode assembly is in contact with the upper can. Therefore, the button-type secondary battery may have the strong coupling so that the gas that is harmful to the human body does not leak to the outside of the battery even though the excessive internal pressure is generated by the gas generated inside the battery, and an electrolyte does not leak to the outside of the battery, be improved in a vacuum ratio occupied by an electrode assembly within the battery to maximize battery capacity and energy density, and be simplified and convenient in manufacturing process to improve production efficiency.

### BRIEF DESCRIPTION OF THE DRAWINGS

FIG. 1 is a cross-sectional view of a button-type secondary battery according to the related art.
FIG. 2 is a cross-sectional view of a button-type secondary battery according to Embodiment 1 of the present invention.
FIG. 3 is a perspective view separately illustrating only an electrode assembly and a first electrode tab in the button-type secondary battery according to Embodiment 1 of the present invention, which is illustrated in FIG. 2.
FIG. 4 is a plan view separately illustrating only a first electrode and a second electrode in the button-type secondary battery according to Embodiment 1 of the present invention.
FIG. 5 is a cross-sectional view of a button-type secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

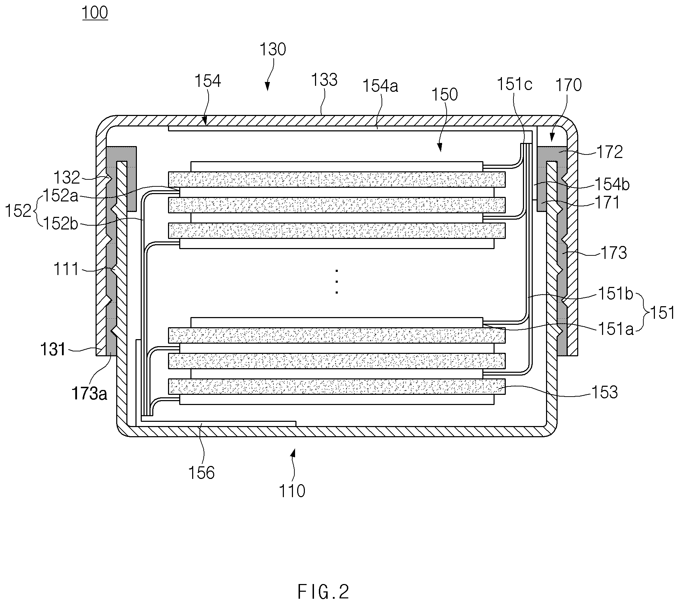

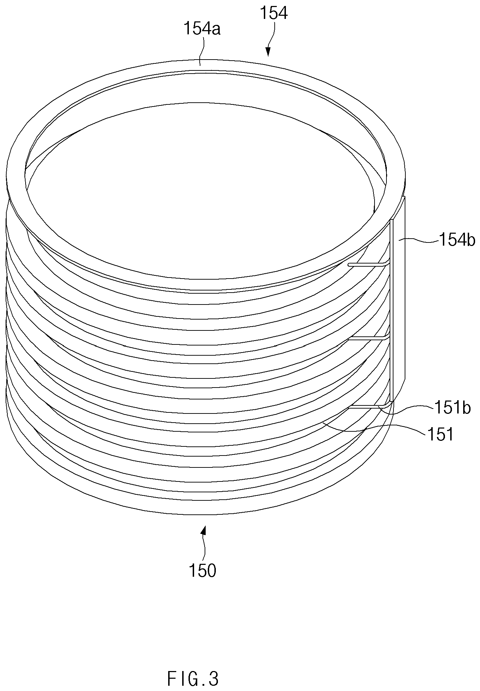

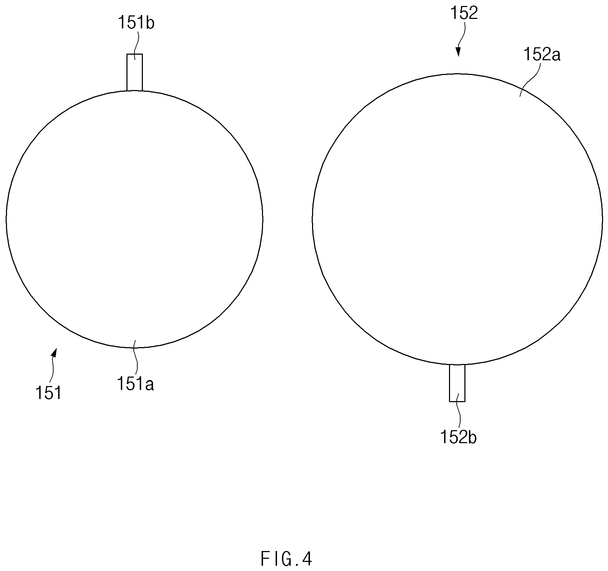

FIG. 2 is a cross-sectional view of a button-type secondary battery according to Embodiment 1 of the present invention. FIG. 3 is a perspective view separately illustrating only an electrode assembly and a first electrode tab in the button-type secondary battery according to Embodiment 1 of the present invention, which is illustrated in FIG. 2. FIG. 4 is a plan view separately illustrating only a first electrode and a second electrode in the button-type secondary battery according to Embodiment 1 of the present invention.

Referring to FIG. 2, a button-type secondary battery 100 according to Embodiment 1 of the present invention may be a battery having a cylindrical shape, and a diameter of the cylindrical battery may be larger than a height of the battery. Also, the button-type secondary battery 100 according to Embodiment 1 of the present invention may comprise an electrode assembly 150, a lower can 110, and an upper can 130. The electrode assembly 150 may be formed by alternately disposing electrodes 151 and 152 and a separator. Particularly, the electrode assembly 150 may be formed by horizontally stacking a plurality of first electrodes 151, a separator 153, and a second electrode 152.

Also, the electrode assembly 150 may be inserted into the lower can 110. The lower can 110 may have an opened upper end in a cylindrical shape. The electrode assembly 150 may be in the form of a stack in which the circular plate-shaped electrodes 151 and 152 and the separator 153 are stacked (see FIGS. 3 and 4). When the electrode assembly 150 is disposed on the lower can 110, the first electrodes 151 and the second electrode 152 of the electrode assembly 150 may be horizontally disposed on the ground.

In the button-type secondary battery 100 according to Embodiment 1 of the present invention, the lower can 110 may have a first screw thread 111 formed on an outer circumferential surface thereof. In addition, the upper can 130 may have a shape that covers the opening of the upper end of the lower can 110. A second screw thread 132 corresponding to the first screw thread 111 may be formed on an inner circumferential surface of the upper can 130. The first screw thread 111 and the second screw thread 132 may have a relationship in which the upper can 130 and the lower can 110 are screw-coupled to each other when coupled to each other. That is, when the upper can 130 is covered and coupled to the lower can 110, the upper can 130 may be rotated with respect to the lower can 110 so as to be screw-coupled to each other, rather than being pressed as it is so as to be coupled to each other. When the upper can 130 rotates relative to the lower can 110, the first screw thread 111 and the second screw thread 132 may be screw-coupled to each other, and the upper can 130 and the lower can 110 are close to each other. When the screw-coupling is finished, the button-type secondary battery 110, in which the upper can 130 and the lower can 110 are completely coupled to each other, may be manufactured. FIG. 2 illustrates a state in which the upper can 130 and the lower can 110 are completely screw-coupled.

The button-type secondary battery 100 according to Embodiment 1 of the present invention comprises an insulator 170 interposed between the upper can 130 and the lower can 110 to prevent the upper can 130 and the lower can 110 from being short-circuited. The insulator 170 may comprise an inner insulator 171, a connection insulator 172, and an outer insulator 173. The inner insulator 171 may be an insulator portion disposed inside the lower can 110. The outer insulator 173 may be a portion of an insulator disposed outside the lower can 110. In addition, the connection insulator 172 may be an insulator portion connecting the inner insulator 171 to the outer insulator 173.

The insulator 170 may be interposed over an upper end of the lower can 110. That is, the connection insulator 172 may be disposed to cover the upper end of the lower can 110, and the inner insulator 171 may be disposed to be in contact with an inner circumferential portion of the upper end of the lower can. In addition, the outer insulator 173 may be disposed so as to be in contact with the outer circumferential portion of the upper end of the lower can 110. In addition, the outer insulator 173 may be formed to be longer than the inner insulator 171.

Referring to FIG. 2, the upper can 130 and the lower can 110 are screw-coupled to each other by a first screw thread 111 and a second screw thread 132. The outer insulator 173 is interposed between the first screw thread 111 and the second screw thread 132, and the outer insulator 173 is pressed by a protruding shape of each of the first screw thread 111 and the second screw thread 132 to form an unevenness shape and is fitted between the first screw thread 111 and the second screw thread 132.

An end 131 of the upper can may have the same height as an end 173a of the outer insulator (see FIG. 2 ), or an end 173a of the outer insulator may has a height lower than an end 131 of the upper can. The fact that the end 173a of the outer insulator has a height lower than the end 131 of the upper can means that the end 173a of the outer insulator is closer to a bottom surface of the lower can 110 than the end 131 of the upper can.

A process of coupling the upper can 130 to the lower can 110 is as follows. First, the lower can 110 in which the electrode assembly 150 is inserted may be placed, and the insulator 170 may be coupled to the lower can 110 in a manner that covers the upper end of the lower can 110. In a state in which the connection insulator 172 is disposed to cover the upper end of the lower can 110, the inner insulator 171 is in contact with the inner circumferential portion of the upper end of the lower can, and the outer insulator 173 is in contact with the outer circumferential portion of the upper end of the lower can 110, the insulator 170 may be coupled to the lower can 110. Then, it may be coupled by rotating the upper can 130 thereon. That is, the inner circumferential surface of the upper can 130 may be screw-coupled by turning while being in contact with the outer circumferential surface of the outer insulator 173. In this process, since the first screw thread 111 and the second screw thread 132 form a protruding screw thread, the outer insulator 173 is pressed by the protruding shape of each of the first screw thread 111 and the second screw thread 132 to form an uneven shape. In FIG. 2, it is shown that the outer thread has an uneven shape.

Since the upper can 130 and the lower can 110 are coupled to each other by applying a very strong pressure, the upper can 130 may not be easily separated from the lower can 110, and thus strong coupling may be possible. Accordingly, even though the excessive internal pressure is generated by the gas generated inside the battery, the battery may not be separated by the gas pressure, or the gas that is harmful to the human body, may be prevented from leaking out of the battery, and the electrolyte may be prevented from leaking out of the battery.

Here, the insulator 170 may be made of a polybutylene terephthalate (PBT) material. The PBT material may have good mechanical properties, and in particular, high rigidity to realize a battery having excellent airtightness and durability.

The button-type secondary battery 100 according to Embodiment 1 of the present invention may comprise a first electrode tab 164 extending from the first electrode 151 of the electrode assembly 150. The first electrode tab 154 may extend from the first electrode 151 of the electrode assembly 150 to be in contact with the upper can 130. Here, the first electrode 151 may be provided as a positive electrode, and the second electrode tab 154 may be provided as a positive electrode tab. In this case, the first electrode tab 154 may extend from the positive electrode of the electrode assembly 150 to be in contact with the upper can 130.

In the button-type secondary battery 100 according to Embodiment 1 of the present invention, the upper can 130 may comprise an upper can electrode terminal part 133. The upper can electrode terminal part 133 may be a portion connected to the first electrode 151 of the electrode assembly 150 through the first electrode tab 154 to form a terminal (particularly, a positive electrode terminal) connected to an external device. Particularly, the upper can electrode terminal part 133 may be a portion covering the opening of the upper end of the lower can 110.

In this case, the first electrode tab 154 may comprise a contact part 154a in contact with the upper can electrode terminal part 133. Specifically, the first electrode tab 154 may comprise a support part 154b and a contact part 154a. The support part 154b may be a portion connected to the plurality of first electrodes 151 of the electrode assembly 150. In the case, in which each of the first electrodes is a positive electrode, the support part 154b may be connected to the positive electrode. The connection may mean that the support part 154b adheres to the first electrode (positive electrode), or that the support part 154b and the first electrode (positive electrode) are integrally formed.

In the button-type secondary battery 100 according to Embodiment 1 of the present invention, the support part 154b may be connected to the first electrode 151 of the electrode assembly 150. In this case, the support part 154b and the lower can 110 may be in contact with each other to cause a risk of the short-circuit accident. To prevent this problem, the inner insulator 171 may be disposed between the first electrode tab 154 and the lower can 110 to prevent the first electrode tab 154 from being in contact with the lower can 110. In FIG. 3, it is seen that the support part 154b and the upper end of the lower can 110 is not in contact with each other because the inner insulator 171 is interposed therebetween.

The contact part 154a connected to the support part 154b may extend from the support part 154b and be in contact with the upper can electrode terminal part 133. Specifically, a top surface of the contact part 154a may be in contact with a bottom surface of the upper can 130. In this case, the entire top surface of the contact part 154a may be in contact with the bottom surface of the upper can 130. Due to this contact, current may flow between the first electrode tab 154 and the upper can 130.

FIG. 3 illustrates only the electrode assembly 150 and the first electrode tab 154 in the button-type secondary battery 100 according to Embodiment of the present invention. Referring to FIG. 3, the support part 154b may be formed in a bar shape. What is desired here may mean various rod shapes. That is, it may be in the form of a thin cylindrical rod, and in addition to the shape, it may be in the form of a rectangular pillar rod, or in the form of a triangular pillar rod. Also, the contact part 154a may be formed in a circular ring shape. The circular ring shape may mean the overall shape of the contact part 154a. That is, a cross-sectional shape of the circular ring may not necessarily be a circle and may have various shapes such as a square or triangle. However, the cross-section may extend along a closed curve to form a circular ring shape as a whole. In addition, a top surface of the circular ring-shaped contact part 154a may be a portion that is in contact with the upper can 130. Particularly, the contact part 154a may be in contact with the upper can electrode terminal part 133.

The meaning that the contact part 154a is in contact with the upper can 130 means that the contact part 154a and the upper can 130 do not adhere to each other. It may just mean being in contact with each other. That is, it may mean that, when the upper can 130 is rotated, the upper can 130 and the contact part 154a only move relative to each other while being in contact with each other, and the rotation of the upper can 130 does not rotate the contact part 154a.

In the related art, the battery is manufactured by bonding the first electrode tab 154 to the upper can electrode terminal part 133 through welding. That is, the first electrode tab 154 adheres to the upper can 130. However, in this method, when the upper can 130 is rotated to screw-couple the upper can 130 to the lower can 110, the first electrode tab 154 is twisted and then broken.

However, in the button-type secondary battery 100 according to Embodiment 1 of the present invention, such a problem does not occur. In the present invention, since the first electrode tab 154 is configured to be only in contact with the upper can 130, the first electrode tab 154 may not be rotated in place even when the upper can 130 is rotated.

In addition, in the button-type secondary battery 100 according to Embodiment 1 of the present invention, a contact area with the upper can 130 may increase by forming the contact part 154a in the circular ring shape. As a result, resistance is reduced to be enabling a smooth current flow.

Also, as a method of further increasing in contact area, there may be a method of increasing in thickness of the contact part 154a having the circular ring shape. Here, the thickness may be expressed as a difference between an inner diameter and an outer diameter of the circular ring. As an example of thickening the contact part 154a, the thickness of the contact part 154a may be thicker than the thickness of the support part 154b.

Furthermore, in the present invention, an outer circumferential diameter of the contact part 154a formed in the circular ring shape and an outer circumferential diameter of the electrode assembly 150 may have sizes corresponding to each other. In this case, since it means that the diameter of the contact part 154a becomes as large as possible, the battery having the lowest resistance may be manufactured with the same thickness.

In addition, a shape of the contact part 154a may be implemented in another form in order to reduce an intensity of the resistance. Specifically, the support part 154b may be formed in a bar shape, and the contact part 154a may be formed in a circular plate shape. If it is formed in the circular plate shape, it may be in surface contact with the upper can to increase in contact area and decrease in resistance.

Particularly, in the button-type secondary battery according to Embodiment 1 of the present invention, the electrode assembly 150 may comprise the first electrodes 151, the separator 153, and the second electrode 152. The plurality of first electrodes 151, the separator 153, and the second electrode 152 may be horizontally stacked.

Referring to FIGS. 2 and 4, each of the first electrodes 151 may comprise a first electrode coating portion 151a formed by applying an electrode active material on an electrode collector and a first electrode non-coating portion 151b extending in a lateral direction from the first electrode coating portion 151a and provided as only the electrode collector without being coated with the electrode active material. The first electrode coating portion 151a may be in the form of a thin circular plate having a circular shape in a plan view.

The first electrode non-coating portion 151b may have a rectangular shape that extends to a side of the first electrode coating portion 151a. The first electrode non-coating portion 151b may be an extending portion of the electrode collector.

Similarly, each of the second electrodes 152 may comprise a second electrode coating portion 152a formed by applying the electrode active material on the electrode collector and a second electrode non-coating portion 152b extending in a lateral direction from the second electrode coating portion 152a and provided as only the electrode collector without being coated with the electrode active material. The second electrode coating portion 152a may be in the form of a thin circular plate having a circular shape in a plan view.

The second electrode non-coating portion 152b may have a rectangular shape that extends to a side of the second electrode coating portion 152a. The second electrode non-coating portion 152b may be an extending portion of the electrode collector.

In the button-type secondary battery according to Embodiment 1 of the present invention, the support part 154b of the first electrode tab 154 may be connected to the plurality of first electrode non-coating portions 151b.

Particularly, as illustrated in FIG. 2, the plurality of first electrode non-coating portions 151b may be bonded to each other to form a first electrode non-coating portion bundle 151c. Here, the support part 154b may be connected to the first electrode non-coating portion bundle 151c.

As the button-type secondary battery according to Embodiment 1 of the present invention is manufactured in such a shape, it is possible to maximize a battery capacity and energy density by improving a volume ratio occupied by the electrode assembly 150 in the battery.

Specifically, in the related art, the electrode assembly 150 inside the battery is provided as a jelly roll-type electrode assembly 150 manufactured by winding the electrodes and the separator. In the electrode assembly 150, a center hole is formed in a center of the electrode assembly due to a core, which serves as a tool for performing the winding. Thus, a space that does not produce electricity is formed in the center of the electrode assembly 150.

On the other hand, in the present invention, the battery capacity and energy density may be maximized because such a wasted space such as a center hole is removed.

In addition, In the electrode assembly 150 of the button-type secondary battery according to Embodiment 1 of the present invention, the separator 153 may be a safety reinforced separator (SRS) single-sided coating separator. The SRS separator may mean that a surface of the separator 153 is thinly coated with a ceramic material. In the case of using the SRS single-sided coating separator, a thinner separator 153 may be used, and thus more electrodes may be stacked to secure more increasing battery capacity.

Also, in the button-type secondary battery according to Embodiment 1 of the present invention, the plurality of first electrodes 151, the separator 153, and the second electrode 152 may have a circular shape and be horizontally stacked, and also, the entire stack may be vertically bonded by heat and a pressure. That is, the stack may exist in the form of one unit by adhesion. In this case, since the first electrodes 151 and the second electrode 152 do not move relative to each other, short circuit may be prevented, and an effect that the electrode assembly 150 is stably maintained may be obtained.

Also, in the button-type secondary battery according to Embodiment 1 of the present invention, another electrode tab of the electrode assembly 150 may be a second electrode tab 156, and the second electrode tab 156 may be connected to the second electrode 152. The second electrode 152 may also comprises a second electrode coating portion 152a and a second electrode non-coating portion 152b, and the second electrode tab 156 may be connected to the plurality of second electrode non-coating portions 152b.

In addition, the method of connecting the second electrode tab 156 to the lower can 110 may be performed by the welding. Since the second electrode tab 156 connected to the lower can 110 is not rotated by the screw coupling, it may not be a problem even if it is connected to the lower can 110 by the welding. That is, unlike when the first electrode tab 154 is connected to the upper can 130 in the contact manner, the second electrode tab 156 may be connected to the upper can 130 in a bonding manner.

### Embodiment 2

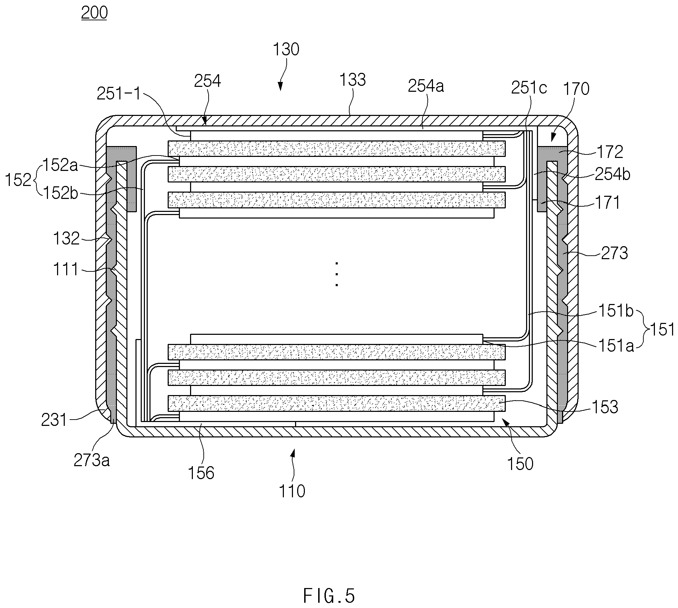

FIG. 5 is a cross-sectional view of a button-type secondary battery according to Embodiment 2 of the present invention.

Embodiment 2 of the present invention is different from Embodiment 1 in that an end 231 of an upper can is formed differently and that the outermost first electrode 251-1 is in contact with an upper can 130.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 5, in the button-type secondary battery 200 according to Embodiment 2 of the present invention, the end 231 of an upper can may be bent in a direction of a central axis of a lower can 110. When the end 231 of the upper can is bent in this way, coupling force between the upper can 130 and the lower can 110 may be significantly improved. In the method of manufacturing the button-type secondary battery 200 according to Embodiment 2 of the present invention, the upper can 130 that is not bent is first rotated to be screw-coupled to the lower can 110, and after the screw coupling is completed, the end 231 of the upper can may be bent in the direction of the central axis of the lower can 110.

FIG. 5 illustrates that an end 273a of an outer insulator further extends downward than the end 231 of the upper can. That is, the outer insulator 273 may extend downward along an outer wall of the lower can 110, but the end 273a of the outer insulator may further extend downward than the end 231 of the upper can. Thus, a short-circuit prevention effect of the upper can 130 and the lower can 110 may be enhanced.

Also, the end 273a of the outer insulator may extend lengthily to be enough to cover a lower edge of the lower can so as to be in contact with a bottom portion of the lower can. In this manner, when the end 273a of the outer insulator extends to be longer, the short-circuit prevention effect of the upper can 130 and the lower can 110 may be further improved.

In addition, a surface that is in contact with the outer insulator 273 at the end 231 of the upper can may be a flat surface. Thus, it is possible to allow the end 231 of the upper can to damage the outer insulator 273. If the end 231 of the upper can is not flat and has a protruding shape, the end 231 of the upper can may be pressed to be bent, and in the process of contacting the outer insulator 273, the contact surface of the outer insulator 273 may be dug or drilled. However, in the present invention, since the tip 231 of the upper can is flat, this problem may be prevented from occurring.

Also, as illustrated in FIG. 5, in the button-type secondary battery 200 according to embodiment 2 of the present invention, the outermost first electrode 251-1 disposed at the outermost side of the electrode assembly 150 may be in contact with a bottom surface of the first electrode tab 254. That is, a top surface of the outermost first electrode 251-1 may be in contact with the bottom surface of the first electrode tab 254. Particularly, the top surface of the outermost first electrode 251-1 may be in contact with the bottom surface of the contact part 254a of the first electrode tab 254. Here, since the outermost first electrode 251-1 and the contact part 254a have the same polarity, the contact with each other may not be a problem. When the outermost first electrode 251-1 and the first electrode tab 254 are formed to be in contact with each other, space efficiency may be further improved. That is, the energy density relative to the volume may be further improved. Also, if a contact area increases, resistance may be reduced. In addition, since it is possible to completely prevent the electrode assembly 150 from shaking inside the battery, it is possible to realize the more stable button-type secondary battery 200.

In addition, the first electrode non-coating portion bundle 251c in which the first electrode non-coating portions are gathered may also be formed to be in contact with the first electrode tab 254. Also, as illustrated in FIG. 5, the first electrode non-coating portion bundle 251c may be formed to be in contact with a bottom surface of the contact part 254a. This structure may also further improve the energy density.

Also, in the button-type secondary battery 200 according to Embodiment 2 of the present invention, the outermost first electrode 251-1 may be a single-sided electrode, which has an outer surface that faces the upper can and is not coated with the electrode active material and an inner surface that is coated with the electrode active material.

Since the top surface of the outermost first electrode 251-1 does not have a second electrode corresponding thereto, it becomes a portion that does not react even if the electrode active material is present. Therefore, if the non-reactive electrode active material is removed, that is, if the outermost first electrode 251-1 is configured as a single-sided electrode, the energy density may be further improved. This is because waste of a space in the non-reactive portion is prevented from occurring. In addition, since the waste of the electrode active material is prevented from occurring, production costs may be reduced. In addition, when the electrode collector and the upper can are in direct contact with each other, the effect of reducing the resistance may be obtained.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Button-type secondary battery
110: Lower can
111: First screw thread
130: Upper can
131: End of upper can
132: Second screw thread
133: Upper can electrode terminal part
150: Electrode assembly
151: First electrode
151a: First electrode coating portion
151b: First electrode non-coating portion
151c: First electrode non-coating portion bundle
152: Second electrode
152a: Second electrode coating portion
152b: Second electrode non-coating portion
153: Separator
154: First electrode tab
154a: Contact part
154b: Support part
156: Second electrode tab
170: Insulator
171: Inner insulator
172: Connection insulator
173: Outer insulator
173a: End of outer insulator
200: Button-type secondary battery
231: End of upper can
251-1: Outermost first electrode
251c: First electrode non-coating bundle
254a: Contact part
254b: Support part
273: Outer insulator
273a: End of outer insulator

## Claims

1. A button-type secondary battery, of which a diameter is greater than a height, the button-type secondary battery comprising:
an electrode assembly;
a lower can in which the electrode assembly is inserted and on which a first screw thread is formed on an outer circumferential surface thereof;
an upper can which is configured to cover an opening of an upper end of the lower can and on which a second screw thread corresponding to the first screw thread is formed on an inner circumferential surface thereof; and
an insulator interposed between the upper can and the lower can to prevent the upper can and the lower can from being short-circuited,
wherein the electrode assembly is formed by horizontally stacking a plurality of first electrodes, a separator, and a second electrode, and
a first electrode tab extending to be connected to each of the first electrodes of the electrode assembly is in contact with the upper can.

2. The button-type secondary battery of claim 1, wherein the upper can comprises an upper can electrode terminal part connected to the first electrode of the electrode assembly through the first electrode tab to form a terminal connected to an external device and configured to cover the opening of the upper end of the lower can, and
the first electrode tab comprises:
a support part connected to the plurality of first electrodes of the electrode assembly; and
a contact part extending from the support part so as to be in contact with the upper can electrode terminal part.

3. The button-type secondary battery of claim 2, wherein the first electrode comprises:
a first electrode coating portion which is coated with an electrode active material on an electrode collector; and
a first electrode non-coating portion which extends laterally from the first electrode coating portion and is not coated with the electrode active material, but is configured as only the electrode collector,
wherein the support part is connected to the plurality of first electrode non-coating portions.

4. The button-type secondary battery of claim 3, wherein the plurality of first electrode non-coating portions are bonded to each other to form a first electrode non-coating portion bundle, and
the support part is connected to the first electrode non-coating portion bundle.

5. The button-type secondary battery of claim 2, wherein the support part is formed in a bar shape, and
the contact part is formed in a circular ring shape.

6. The button-type secondary battery of claim 5, wherein the contact part having the circular ring shape has a thickness greater than that of the support part.

7. The button-type secondary battery of claim 2, wherein the support part is formed in a bar shape, and
the contact part is formed in a circular plate shape.

8. The button-type secondary battery of claim 5, wherein an outer circumferential diameter of the contact part formed in the circular ring shape and an outer circumferential diameter of the electrode assembly have sizes corresponding to each other.

9. The button-type secondary battery of claim 1, wherein the insulator is made of a polybutylene terephthalate (PBT) material.

10. The button-type secondary battery of claim 1, wherein the insulator comprises:
an inner insulator disposed inside the lower can;
an outer insulator disposed outside the lower can; and
a connection insulator configured to connect the inner insulator to the outer insulator.

11. The button-type secondary battery of claim 10, wherein the upper can and the lower can are screw-coupled to each other by the first screw thread and the second screw thread,
the outer insulator is interposed between the first screw thread and the second screw thread, and
the outer insulator is pressed by a protruding shape of each of the first screw thread and the second screw thread to form an uneven shape and is fitted between the first screw thread and the second screw thread.

12. The button-type secondary battery of claim 10, wherein the inner insulator is disposed between the first electrode tab and the lower can to prevent the first electrode tab and the lower can from being in contact with each other.

13. The button-type secondary battery of claim 1, wherein the separator comprises a safety reinforced separator (SRS) single-sided coating separator.

14. The button-type secondary battery of claim 1, wherein the plurality of first electrodes, the separator, and the second electrode have a circular shape and are stacked horizontally, wherein the entire stack is vertically bonded by heat and a pressure.

15. The button-type secondary battery of claim 1, wherein the outermost first electrode disposed at the outermost side of the electrode assembly is in contact with a bottom surface of the first electrode tab.

16. The button-type secondary battery of claim 2, wherein the outermost first electrode disposed at the outermost side of the electrode assembly is in contact with a bottom surface of the contact part.

17. The button-type secondary battery of claim 15 or 16, wherein the outermost first electrode comprises a single-sided electrode in which an outer surface facing the upper can is not coated with an electrode active material, but only an inner surface is coated with the electrode active material.

18. The button-type secondary battery of claim 1, wherein an end of the upper can is bent in a direction of a central axis of the lower can.

19. The button-type secondary battery of claim 10, wherein the outer insulator extends downward along an outer wall of the lower can,
wherein an end of the outer insulator further extends downward than an end of the upper can.
